Europäisches Patentamt

**European Patent Office**

Office européen des brevets

(11) Publication number: **0 085 253**
**A1**

(12) # EUROPEAN PATENT APPLICATION

(21) Application number: **82306887.9**

(22) Date of filing: **23.12.82**

(51) Int. Cl.³: **G 01 B 5/25**
**G 01 B 5/00**

(30) Priority: **30.12.81 US 335697**

(43) Date of publication of application:
**10.08.83 Bulletin 83/32**

(84) Designated Contracting States:
**FR GB IT SE**

(71) Applicant: **KUHN MFG. CO., INC.**
**11428 Fleetwood Street**
**Sun Valley California 91352(US)**

(72) Inventor: **Kuhn, Charles Joseph**
**10520 Plainview Avenue**
**Tujunga California(US)**

(72) Inventor: **Henrichs, William Frank**
**9346 Charrick Drive**
**Tujunga California(US)**

(74) Representative: **Smith, Philip Antony et al,**
**REDDIE & GROSE 16 Theobalds Road**
**London WC1X 8PL(GB)**

(54) Vehicle body alignment gauges.

(57) The gauge has guide rails 78 and 80 on which mounting block 98 is slidable. Extendable arms 106 and 108 are pivotally mounted on the block 98 and coupled by links 110 and 112 to a drag-link mounting block 100 also sliding on the rails. Indicator dowels 116 and 118 on the ends of arms 106 and 108 gauge the symmetrical condition of the vehicle body 56 about a centre line.

Fig 1

EP 0 085 253 A1

Croydon Printing Company Ltd

1

## VEHICLE BODY ALIGNMENT GAUGES

The present invention relates to vehicle body alignment gauges, and more specifically to economical gauges which are easily oriented with reference to a vehicle frame or body, adjustable to facilitate an accurate indication of the proper or improper alignment of the vehicle frame or body, and conveniently usable in the often cramped quarters which plague the workmen of the vehicle body frame correction trade.

The present invention includes front and rear uprights which support a lower assembly above the floor of the workplace but below the vehicle undercarriage. The lower assembly includes extension arm and drag link assemblies which are movably mounted upon a fixed length guide which is adjustable on the upright to allow for motion towards and away from the undercarriage of the vehicle. Each extension arm and drag link assembly includes a pair of arms, the outer free ends of which may be moved in opposite but symmetrical directions in a plane about a line parallel with the fixed length guide.

Tapered dowels are located near the free ends of the extension arm so as to be simultaneously alignable with one of the pairs of reference points on the undercarriage of an undamaged vehicle if the fixed length guide is parallel with the longitudinal axis of the vehicle and the free ends of the extension arms are sufficiently moved away from the fixed length guide. If alignment occurs, the dowels can be inserted into the vehicle reference points simply by adjusting the height of the fixed length guide on the uprights. If one dowel is aligned and its counterpart not aligned the defect has been located and the non-aligned dowel may thus be used as a target for the application of a corrective force.

The present invention may include a tower assembly which includes a second fixed length guide which may be raised or lowered independently of the lower asembly fixed length guide. As with the lower assembly the tower assembly includes an extension arm and drag link assembly which is movably mounted upon the tower guide for similar motion in a second plane about a line parallel with the tower guide. Preferably the first and second planes are parallel. Tapered dowels are likewise located near the free ends of the extension arms of the tower assembly and may be used from above the vehicle to check the symmetrical alignment of other vehicle reference points which are intended to be symmetrically distributed about the longitudinal axis of the vehicle, such as the wheel house bolt holes on an automobile.

Fig. 1 is a perspective view of a vehicle body alignment gauge constructed in accordance with the principles of the present invention with an automobile superimposed;

Fig. 2 is a top plan view of the gauges of Fig. 1 showing partial proper alignment with a damaged vehicle undercarriage;

Fig. 3 is a top plan view of the guages of Fig. 1 shown in proper alignment with an undamaged vehicle undercarriage; and

Fig. 4 is a perspective view of an alternative embodiment of a drag link or extension arm block according to the present invention.

Referring now to the drawings, the gauges of the present invention, generally designated by the reference numeral 10, are shown to include front and rear upright supports generally designated by the reference numerals 12 and 14 respectively. The front upright support 12 is shown to include two spaced rods 20 and 22 respectively. The rods have flanged bottoms 24 and 26 which are spaced and rest upon the floor to partially support the gauges 10 thereabove. Rods 20 and 22 include tapered and partially threaded tops which terminate in shoulders (not shown in the drawings) suitable for supporting appertured upper support block 28. Female threaded caps 30 and 32 are threadably secured atop rods 20 and 22 to removably secure upper support block 28 thereatop, thereby adding stability to front upright support 12.

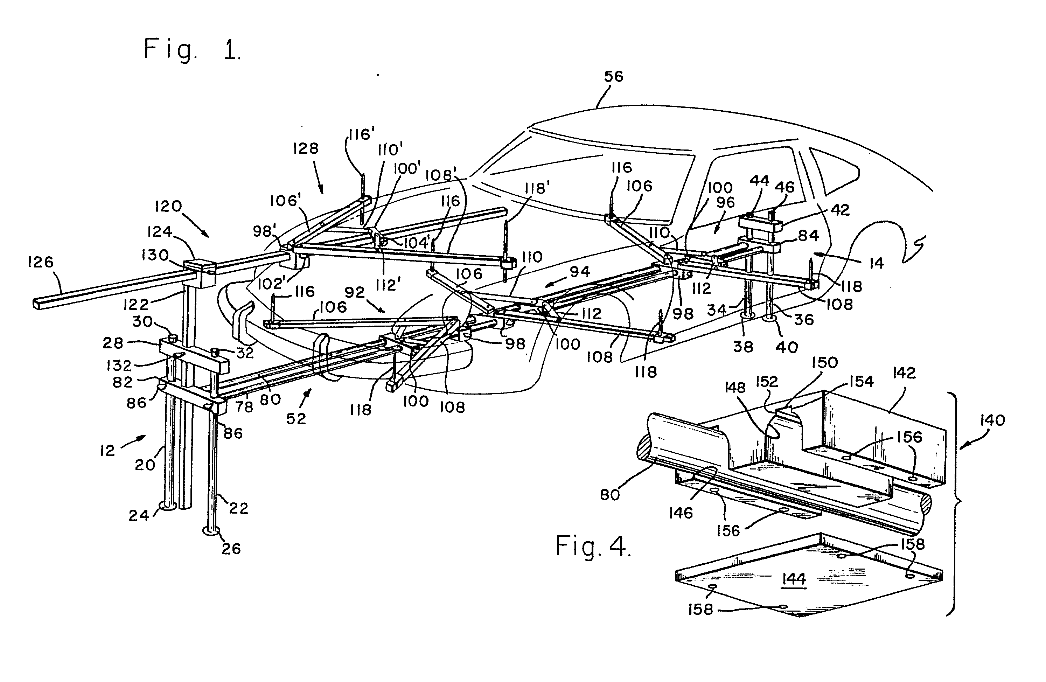

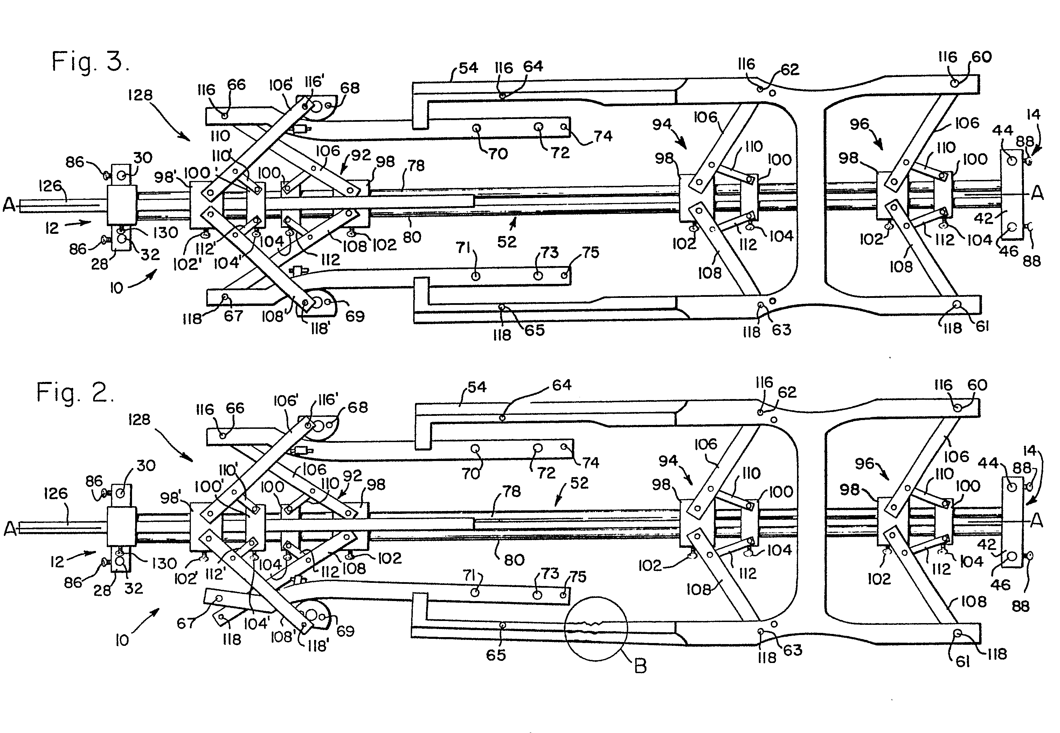

Rear upright support 14, is similarly constructed to include threaded and shouldered rods 34 and 36, flange bottoms 38 and 40, upper support block 42 and caps 44 and 46. Together the front and rear upright supports 12 and 14, serve to adjustably suspend a lower gauge assembly, generally designated by the reference numeral 52, above the floor of the work area but below the undercarriage 54 (Figs. 2 and 3) of a vehicle 56 such as an automobile shown superimposed in Fig. 1.

As shown in Figs. 2 and 3, the vehicle underside or undercarriage 54 is provided with a plurality of paired reference points such as 60 and 61, through 74 and 75 (to number but a few) which take the form of appertures in the undercarriage 54. These paired reference points are distributed, one each symmetrically about the longitudinal axis of an undamaged vehicle 56.

The lower gauge assembly includes two fixed length guides 78 and 80 which are secured to end support blocks 82 and 84 by any suitable means. The end support blocks 82 and 84 are suitably bored to allow for insertion and reciprocal movement on front and rear upright supports 12 and 14, as best understood by reference to Fig. 1. The end support blocks 82 and 84 are adapted to facilitate insertion and operation of threaded thumb screws 86 and 88 (or an equivalent means) to allow for reversible locking of the lower gauge assembly 52 at a desired height above the floor by engaging thumb screws 86 and 88 with rods 20, 22, 34 and 36. To readjust the height of the lower gauge assembly the thumb screws 86 and 88 are disengaged from the rods and the end support blocks 82 and 84 moved to the desired height.

The lower gauge assembly 52 further includes three extension arm and drag link assemblies generally designated by the reference numerals 92, 94 and 96. Each of the extension arm and drag link assemblies 92, 94 and 96 are identically constructed and accordingly only one will be described in detail herein with common numerals designating common parts on the drawings.

Each of the extension arm and drag link assemblies 92, 94 and 96 of the lower gauge assembly 52, includes bored extension arm and drag link mounting blocks 98 and 100 respectively, suitable for receiving and sliding on the fixed length guides 78 and 80. The extension arm and drag link mounting blocks 98 and 100 are adapted to facilitate insertion and operation of threaded thumb screws 102 and 104, respectively (or an equivalent means) to allow for reversible and independent locking of blocks 98 and 100 at a given position on guides 78 and 80 simply by engaging the thumb screws 102 or 104 respectively with guide 80. Extension arms 106 and 108 are suitably and pivotably secured to extension arm mounting block 98. Drag links 110 and 112 are pivotably secured to the extension arms 106 and 108 respectively. Both drag links 110 and 112 are also pivotably secured to drag link mounting block 100.

As best shown in Fig. 1, tapered upstanding dowels 116 and 118 are suitably, removably and adjustably affixed near the ends of the extension arms 106 and 108 respectively at right angles thereto by any suitable means. It is important to note that the distance from the centerline of the pivot point of extension arm 106 on block 98 to the centerline of the dowel 116, should be identical to the distance between the centerline of the pivot point for extension arm 108 on block 98 to the centerline of dowel 118. Additionally, the axes of pivot for extension arms 106 and 108 on block 98, should be parallel and symmetrically located about a centerline A-A, which extends betweeen guides 78 and 80. The axes of pivot for the pivot points of drag links 110 and 112 on block 100 should similarly be parallel to each other, symmetrically located about centerline A-A and additionally parallel with the axes of pivot for extension arms 106 and 108 on block 98.

The drag links 110 and 112 should be of equal length. Even more importantly, the distance between the axes of pivot for extension arms 106 and 108 on blocks 98 to the axes of pivot at the point of pivotal interconnection with drag links 110 and 112 respectively, should be equal so that the angle formed by extension arm 106 and drag link 110 is always equal to the angle formed by extension arm 108 and drag link 112. In this fashion, movement of either or both of mounting blocks 98 or 100 causes an identical but rotationally contrary movement of the extension arms 106 and 108 in coextensive and parallel planes.

The coextensive and parallel planes of movement for extension arms 106 and 108, include a line which is parallel to centerline A-A and designated as line A'-A' (not shown in the drawings). A line extending between the axes of pivot for extension arms 106 and 108 on block 98, and lying in the coextensive and parallel planes will intersect line A'-A' at a right angle. An identical relationship exists for the axes of pivot for the drag links 110 and 112. Thus, tapered dowels 116 and 118 are always located in mirror image fashion on different sides of the centerline A-A and may be moved only in unison.

As best illustrated by Fig. 1, the gauges of the present invention also include a tower gauge assembly generally designated by the reference numeral 120. The tower assembly 120, includes an upright tower support 122 with a bored block 124 rigidly secured atop thereof. A second or tower guide 126 is slidable in the bore of block 124 and is functionally equivalent to the lower gauge assembly fixed link guides 78 and 80. A tower assembly extension arm and drag link assembly, generally designated by the reference numeral 128, includes bored extension arm and drag link mounting blocks 98' and 100', both reciprocal on the tower guide 126 and the functional equivalent of their lower assembly counterparts. Similarly, extension arms 106' and 108', drag links 110' and 112', tapered dowels 116' and 118' and thumb screws 102' and 104' are included in the tower assembly to perform the equivalent function of their lower assembly counterparts.

Block 124, atop upright tower support 122, is adapted to receive and facilitate operation of threaded thumb screw 130 to allow for reversible locking of guide 126.

Upper support block 28 of front upright support 14 and the end support block 82 of the lower gauge assembly 52, are bored to receive upright tower support 122 reciprocally therein. The upper support block 28 is adapted to receive and facilitate operation of threaded thumb screw 132 to thereby permit reversible locking of upright tower support 22 in a manner previously described. This allows for the tower gauge assembly 120 to be locked at a desired height. The plane of movement of extension arms 106' and 108' is parallel to the plane of movement of lower gauge assembly counterparts 106 and 108. Tower guide 126 is parallel to centerline A-A and a plane which includes the centerline of tower guide 126, lines A-A and A'-A' is perpendicular to the planes of movement for extension arms 106 and 108.

In operation, the gauges 10 of the present invention are rested on the top side of a rack (not shown in the drawings) of the type typically used to hold vehicles during body correction operations for support and are additionally supported by front and rear upright supports 12 and 14 respectively. Alternatively, the gauges 10 may be supported solely by the front and rear upright supports 12 and 14 and the car may be tied to suitable anchors on the floor of the work place. The extension arm and drag link assemblies 92, 94 and 96 and 128 are then collapsed by loosening the thumb screws 102, 104, 102' and 104' thereby allowing the arms to be brought close to the fixed length guides 78 and 80, and 126. Thumb screw 130 in block 124 atop upright tower support 122 is loosened to facilitate retraction of the tower gauge assembly 120 from the area where the vehicle 56 will be mounted for gauging. Similarly, the lower gauge assembly 52 may be adjusted downwardly near the floor to permit sufficient clearance for the automobile or other vehicle 56 to be oriented with respect to the gauges 10 of the present invention, by loosening thumb screws 86 and 88 in end blocks 82 and 84 respectively. The vehicle 56 such as an automobile, is then rolled to the workplace and oriented with its longitudinal axis generally parallel to centerline A-A and the centerline of tower guide 126. Additionally, the plane of the undercarriage is oriented parallel to the planes of movement for extension arms 106, 108, 106' and 108'. With the vehicle 56 thus oriented with respect to the gauges the lower gauge assembly 52 may be raised towards the undercarriage 54 and suitably locked with thumb screws 86 and 88 at a desired height. Similarly, the tower gauge assembly 120 may be adjusted towards the vehicle by movement of fixed guide 126 in block 124 and similarly locked in a desired position by use of thumb screw 130. With this accomplished both the vehicle 56 and the gauges 10 are suitably situated to check the alignment condition of the vehicle for defects.

Referring now to Figs. 2 and 3, the vehicle undercarriage 54 is shown in various conditions of alignment with gauges 10 of the present invention. Fig. 2 shows a vehicle undercarriage damaged by mishap, such as a side collision, to cause misalignment by a defect as at the circled portion B. With the use of the present invention this misalignment may be detected as follows. As shown in Figs. 2 and 3, the extension arm and drag link assemblies 94 and 96 have been located at intermediate and extreme rear portions of the vehicle with extension arms 106 and 108 extended to align dowels 116 and 118 with reference points 62 and 63, and 60 and 61 respectively. The proper alignment of the dowels 116 and 118 and easy insertion into the paired reference points indicates to the workman that misalignment has not occurred near the rear or midsection of the vehicle. However, as illustrated in Fig. 2 such is not the case near the front of the vehicle. It can be seen that the defect B in undercarriage 54 has caused an inward bend of the lower portion of the driver's side siderail so that the dowel 118 of extension arm and drag link assembly 92 does not align with reference point 67 while dowel 116 of extension arm and drag link assembly 92 is in alignment with reference point 66. Similarly, extension arm and drag link assembly 128 shows a non-alilgned condition. Thus, the workman has easily detected that the defect is between the extreme front end of the vehicle and reference point 63 on the driver's side.

Dowels 118 and 118' of extension arm and drag link assemblies 92 and 128 may thus be used as targets for the application of a corrective force. A pulling device of the type described in United States Reissue Patent No. 29664 issued July 13, 1978 may now be used to repair the driver's side siderail of undercarriage 54 and the dowels 118 and 118' of extension arm and drag link assemblies 92 and 128 may be used as targets to indicate when the appropriate amount of correction has been imparted ot the vehicle undercarriage. As shown in Fig. 3, after an appropriate amount of correction has been imparted to the undercarriage 54, dowels 118 (of assembly extension arm and drag link assembly 92) and 118' will be in appropriate alignment with respective reference points.

A slight variation of either the extension arm or drag link mounting blocks is shown in Fig. 4, and generally designated by the reference numeral 140. The alternate mounting block 140, is machined or extruded to include block structure 142 and coverplate 144. Block structure 142 includes a pair of open bottomed channels 146 and 148 for engaging guides such as 78 and 80 and are accordingly and appropriately spaced. As shown with reference to channel 148, both channels 146 and 148, are provided with a recess 150 at the top thereof, each having ridges 152 and 154 which engage the guides 78 and 80 to stabilize the extension arm and drag link assemblies 92, 94, and 96 thereby preventing rocking. Block structure 142 and coverplate 144 are provided with threaded and unthreaded apertures 156 and 158 respectively to allow for securement of plate 144 to block 142.

11

## CLAIMS

1. Gauges (10) for indicating the alignment condition of a vehicle body of the type having paired points distributed symmetrically about a body axis if the body is in a satisfactory alignment condition comprising:

a guide (78, 80) having a centerline alignable in a parallel condition with said body axis to define a first plane orientable in a generally perpendicular relationship to the plane of the underside of the vehicle body, for orienting said gauges (10) in a desired relationship with said vehicle;

an extension arm mounting block (98) operably associated with said guide (78, 80) for constrained movement therealong; and

paired extension arms (106, 108) pivotally interconnected with said extension arm mounting block for symmetrical movement about a line parallel to said guide to allow gauging of the relationship of the paired points about the body axis.

2. The gauges (10) of claim 1, including:

a drag link mounting block (100) operably associated with said guide (78, 80) for constrained movement therealong; and

paired drag links (110, 112) pivotally interconnected with said drag link mounting block (100) and individually and pivotally interconnected, one each, with said paired extension arms (106, 108) for causing said symmetrical movement of said paired extension arms, in mirror image fashion, with movement of either said extension arm mounting (98) or drag link mounting (100) blocks.

3. The gauges (10) of any one of claims 1-2, wherein said extension arms (106, 108) are movable in generally parallel and coextensive planes.

4. The gauges (10) of any one of claims 1-3, including a supporting structure (12, 14) for said guide (78, 80).

5. The gauges (10) of any one of claims 1-4, including a selective and reversible height adjustor (82, 84, 86, 88) for said guide (78, 80).

6. The gauges (10) of any of claims claim 1-5, said extension arm mounting block (98) including: a ridge recess (146, 148, 150, 152, 154) for engaging said guide (78, 80) to prevent rocking of said extension arm mounting block (98).

7. The gauges (10) of any one of claims 1-6, said drag link mounting block (100) including: a ridge recess (146, 148, 150, 152, 154) for engaging said guide (78, 80) to prevent rocking of said drag link mounting block (100).

8. The gauges (1) of any one of claims 1-7, said paired extension arms (106, 108) including: one each, an indicator dowel (116, 188), symetrically movable about said line which is parallel to said guide (78, 80) to be simultaneously alignable, one each with said paired points, if the vehicle body is in a satisfactory condition.

9. The gauges of any preceeding claims 1-8, said indicator dowels being height adjustable relative to said paired extension arms (106, 108).

Fig. 1.

Fig. 4.

Fig. 3.

Fig. 2.

0085253

**EUROPEAN SEARCH REPORT**

European Patent Office

0085253

Application number

EP 82 30 6887

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 371 671 (G. NEGRIN) <br> * Figures 1, 5; claim 1, pages 3, 4 * | 1-3 | G 01 B 5/25 <br> G 01 B 5/00 |
| | --- | | |
| X | DE-A-2 051 723 (AB VOLVO) <br> * Claims 1-3; figres 1-3 * | 1,4,5 | |
| | --- | | |
| X | FR-A-2 371 668 <br> (BILSKADECENTER/STOCKHOLM AG) <br> * Figure 6; claims 1, 10, 11 * | 1,4,5 | |
| | --- | | |
| Y | US-A-2 704 894 (M. ROGERS) <br> * Figures 1, 3 * | 1 | |
| | --- | | |
| Y | WO-A-8 101 740 (P. MACGREGOR) <br> * Figure 1, claims 1-3 * | 1 | TECHNICAL FIELDS SEARCHED (Int. Cl. ³) |
| | ----- | | G 01 B 5/00 |

The present search report has been drawn up for all claims

| Place of search <br> BERLIN | Date of completion of the search <br> 25-03-1983 | Examiner <br> KOEHN G |
|---|---|---|